# EUROPÄISCHE PATENTSCHRIFT

(11) **EP 1 396 238 B1**
(45) Veröffentlichungstag und Bekanntmachung des Hinweises auf die Patenterteilung: **29.11.2006**
(21) Anmeldenummer: 03019578.8
(22) Anmeldetag: 03.09.2003
(51) Int. Cl.: A61C 13/00, B22C 1/18

(54) **Verfahren zur Herstellung einer Gussmuffel**
Method for producing a casting mould
Méthode de fabrication d'un moule de coulage

(30) Priorität: 03.09.2002 DE 10242140
(43) Veröffentlichungstag der Anmeldung: 10.03.2004
(73) Patentinhaber: DENTAURUM J.P. WINKELSTROETER KG, 75228 Ispringen (DE)
(72) Erfinder: Niesler, Bernd, 75228 Ispringen (DE)
(74) Vertreter: Wössner, Gottfried

(56) Entgegenhaltungen:
- EP-A- 1 029 515
- DE-A- 3 536 794
- DE-A- 4 002 815
- US-A- 4 180 918
- US-A- 6 013 125

## Beschreibung

Die Erfindung betrifft ein Verfahren zur Herstellung einer Gussmuffel aus einer Einbettmasse für die Herstellung von metallischen Gießlingen, insbesondere für die Dentaltechnik.

Herkömmlich wird die Einbettmasse bei dem vorgenannten Verfahren mit einer Anmischflüssigkeit zu einer gießbaren Masse verarbeitet und in einen Formenhohlraum eingegossen, in welchem gegebenenfalls ein abzugießendes Modell angeordnet ist. Diese Modelle basieren häufig auf einer Grundstruktur aus Gips, auf dem das zu gießende Teil mittels Wachs und/oder Kunststoff modelliert ist.

Die gießbare Masse wird dann ausgehärtet und steht nach dem Entfernen der Wachs- und/oder Kunststoffanteile, die beispielsweise durch Ausschmelzen entfernt werden, für den Gießvorgang zur Verfügung.

Einbettmassen, die speziell für das Gießen von Titangließlingen geeignet sind, sind beispielsweise aus der DE 38 25 250 A1 bekannt.

Aufgabe der vorliegenden Erfindung ist es, das eingangs genannte Verfahren so zu modifizieren, dass Gussmuffeln mit besseren mechanischen Eigenschaften erhalten werden.

Diese Aufgabe wird erfindungsgemäß dadurch gelöst, dass die gießbare Masse in dem Formenhohlraum zunächst nur partiell ausgehärtet wird, wobei dann die partiell ausgehärtete gießbare Masse einer Mikrowellenbestrahlung von max. 500 W während 2 bis 15 min ausgesetzt wird. Danach schließt sich eine Ruhephase von mindestens 5 min an, während der die Mikrowellenbestrahlung unterbrochen und die Gussmuffel auch sonst nicht beheizt wird. Erst danach werden die Wachs- und/oder Kunststoffmaterialien des Modells ausgeschmolzen. Unter Ausschmelzen versteht man das Aufheizen der Gussmuffel auf eine Temperatur bei der die Materialien des Modells nicht nur verflüssigt werden und aus der Muffel auslaufen können, sondern bei der Reste der Materialien rückstandsfrei zersetzt, d.h. verbrannt werden.

Das Ausschmelzen kann konventionell im Ofen geschehen oder aber erneut durch Mikrowellenbestrahlung.

Erstere Vorgehensweise wird bevorzugt, da damit eine genaue Endtemperatur der Muffel über die Ofentemperatur festgelegt und gleichzeitig die Muffel für den Abguss vorbereitet und temperiert werden kann.

Erstaunlicherweise erzielt die vorliegende Erfindung durch die zunächst nur teilweise Aushärtung ein teilweises Abbinden der Einbettmasse in dem Formenhohlraum und durch die nachfolgende Mikrowellenbestrahlung eine Reduzierung der Rissempfindlichkeit der Gussmuffel, eine bessere Oberflächenqualität des Gussobjekts sowie eine erhöhte Qualität des Gussobjekts hinsichtlich von Fehlstellen (Lunker und dergleichen).

Darüber hinaus ist mit dem erfindungsgemäßen Verfahren eine Zeitersparnis für den Abbindevorgang verbunden.

Die Anwendung von Mikrowellen im Zusammenhang mit der Verwendung von Gussmuffeln ist zwar an sich bekannt, jedoch wird die Mikrowellenbestrahlung herkömmlich lediglich dazu verwendet, die Gussmuffeln auf eine Endtemperatur von bis zu 1150 °C zu erhitzen, bevor dann der eigentliche Abgießvorgang mit Dentalmetall stattfinden kann. Ein hierfür geeignetes Gerät ist von der Firma Jelenko, Armonk, NY, USA unter der Bezeichnung "Dental Wave 7000 System" erhältlich.

Die DE 197 55 911 A1 beschreibt ein Verfahren zur Herstellung zahntechnischer Form- oder Modellierteile aus Gips, und beim Trocknen dieser Form- oder Modellierteile wird eine Mikrowellentrocknung eingesetzt.

Solche Form- oder Modellierteile aus Gips sind mit den hier herzustellenden Gussmuffeln nicht vergleichbar, insbesondere müssen sie den Anforderungen von Gussmuffeln nicht standhalten, sondern sind vergleichbar mit dem oben erwähnten Gips-Meistermodell.

Aus der DE 44 04 727 A1 ist ein Verfahren zur Herstellung von porösen Formteilen bekannt, bei dem eine mikrowelleninduzierte Expansion und Härtung vorgenommen wird. Verwendet werden dort keine dentalen Einbettmassen und die Erzeugung der Porosität steht dem Einsatzzweck der erfindungsgemäß herzustellenden Gussmuffeln diametral entgegen. Bei dem dort beschriebenen Verfahren werden Poren insbesondere dadurch erzeugt, dass mikrowellenaktive Lösemittel verdampft werden.

Schließlich ist aus der DE 35 36 794 A1 ein Verfahren zum Wachsausschmelzen in der dentalen Gusstechnik bekannt, bei dem Mikrowellenstrahlung angewendet wird. Hier wird vorgeschlagen, nach einem kurzen Behandlungsschritt mit niedriger Energiestufe (Dauer ca. 1 min) das Wachs anschließend mit hoher Energiestufe auszuschmelzen und restlos aus der Form zu eliminieren (Dauer ca. 2 min). Diese Vorgehensweise bringt zwar, wie auch das erfindungsgemäße Verfahren, einen erheblichen Zeitgewinn, jedoch findet man keine Verbesserung der mechanischen Eigenschaften der Gussmuffel, so dass sich damit insbesondere kein sogenannter Speed-Betrieb beim Titanguss durchführen lässt.

Entscheidend ist für die erfindungsgemäße Verfahrensweise zum einen die Mikrowellenbestrahlung bei definierter, niedriger Energie, d.h. bis max. 500 W, vorzugsweise von 80 bis 150 W während einem ausgedehnten Zeitraum von 2 bis 15 min, wobei die obere Zeitgrenze mit einer sehr niedrigen Mikrowellenenergie korrespondiert und die kürzere Zeit mit der Obergrenze von 500 W. Der Zeitbedarf im bevorzugten Energiebereich beträgt 4 bis 15 min.

Bevorzugt werden für das erfindungsgemäße Verfahren phosphatgebundene Einbettmassen verwendet. Diese Einbettmassen sind als solche seit vielen Jahren mit großen Erfolg im Einsatz und eignen sich insbesondere auch für das vorliegende Verfahren. Auf die mit den phosphatgebundenen Einbettmassen gemachten Erfahrungen kann deshalb zurückgegriffen werden, wobei das erfindungsgemäße Verfahren deutlich bessere mechanische Eigenschaften der Gussmuffel erzielt bei gleichzeitiger Einsparung an Herstellzeit.

Das erfindungsgemäße Verfahren eignet sich insbesondere auch für solche Einbettmassen, die speziell für das Gießen von edelmetallhaltigen oder aber auch edelmetallfreien Dentallegierungen entwickelt worden sind.

Insbesondere eignet sich das erfindungsgemäße Verfahren zur Herstellung von Gussmuffeln aus Einbettmassen, welche für das Gießen von Titan oder Titanlegierungen geeignet sind, insbesondere im Hinblick darauf, dass die erfindungsgemäß hergestellten Gussmuffeln besonders gut für den Abguss von Titan oder Titanlegierungen geeignet sind, vor dem Hintergrund der besonderen mechanischen Eigenschaften der erfindungsgemäß hergestellten Gussmuffeln.

Das erfindungsgemäße Verfahren ist auch von Vorteil anzuwenden, wenn die Einbettmasse aus Spinelleinbettmassen ausgewählt ist.

Die erfindungsgemäß vorbereiteten Gussmuffeln können zum Ausschmelzen der Wachs- und/oder Kunststoffmaterialien in einen auf eine Temperatur von 300 °C bis 500 °C vorgeheizten Ofen gesetzt werden und die Ofentemperatur anschließend auf die Sinterungsendtemperatur von beispielsweise 880 °C erhöht werden. Dies bringt bei dem Ausschmelzschritt und dem Aufwärmeschritt bis auf die Sinterungsendtemperatur einen erheblichen Zeitgewinn.

Im Fall der erfindungsgemäßen Vorgehensweise kann die Gussmuffel aber auch zum Ausschmelzen der Wachs- und/oder Kunststoffmaterialien in einen bereits auf Sinterungsendtemperatur vorgeheizten Ofen gesetzt werden. Hier wird allerdings empfohlen, nur Muffeln bis zur Größe 3 zu verwenden. Die mindestens 5-minütige Ruhepause nach der Mikrowellenbehandlung mit niedriger Energie ist aber unbedingt einzuhalten. Dies bringt eine extreme Zeitersparnis, so dass auch Abgüsse unter extremem Zeitdruck angefertigt werden können, wobei dann allerdings teilweise minimale Schwankungen in der Passgenauigkeit und des Ausfließverhaltens in Kauf genommen werden müssen.

Die Erfindung betrifft schließlich eine Gussmuffel hergestellt nach einem der Verfahren gemäß den Ansprüchen 1 bis 7 sowie die Verwendung einer Gussmuffel für die Herstellung von festsitzendem Zahnersatz als auch die Verwendung einer solchen Gussmuffel für die Herstellung von herausnehmbarem Zahnersatz.

Diese und weitere Vorteile der Erfindung werden im Folgenden anhand von Beispielen noch näher erläutert.

### Beispiel 1:

Eine handelsübliche Einbettmasse für die Titan-Kronen- und Brückentechnik (RemaTitan ultra der Fa. DENTAURUM J.P. Winkelstroeter KG, Ispringen, Deutschland) wird nach Herstellerangabe 60 sek unter Vakuum mit der unter demselben Markennamen erhältlichen Anmischflüssigkeit zu einem Brei angemischt und in eine Form gegossen, die die Wachsmodellation enthält. Abweichend von den Herstellerangaben wird nach einer Abbindezeit von 60 min der Boden der Form mit dem Gusstrichterformer entfernt und die Gussmuffel für die Dauer von 8 bis 10 min (je nach Größe der Wachsmodellation) einer Mikrowellenbestrahlung ausgesetzt, wobei die eingestellte Mikrowellenenergie 80 bis 100 W beträgt.

Danach wird die Gussmuffel aus der Mikrowelle herausgenommen und mindestens eine Ruhephase von 5 min eingehalten. Danach wird nach Herstellerangabe die Gussmuffel in einen kalten Vorwärmeofen gesetzt und mit einer Aufheizrate von 4 °C/min bis 250 °C aufgeheizt, 90 min bei dieser Temperatur gehalten, weiter aufgeheizt auf eine Temperatur von 880 °C (Sinterungsendtemperatur) und bei dieser Temperatur 20 min gehalten. Die Gussmuffel wird dann im Ofen bis auf 400 °C abgekühlt und nach einer Haltezeit von 30 min bei dieser Temperatur wird die Gussmuffel abgegossen.

### Beispiel 2:

Die bereits in Beispiel 1 verwendete handelsübliche Einbettmasse wird nach Herstellerangabe 60 sek unter Vakuum mit der zugehörigen Anmischflüssigkeit zu einem Brei angemischt und in eine Form gegossen, die die Wachsmodellation enthält. Wie in Beispiel 1 wird bis einschließlich der Mikrowellenbestrahlung weitergearbeitet. Abweichend von Beispiel 1 wird die Gussmuffel nach einer Ruhephase von mindestens 5 min abweichend von den Herstellerangaben in einen 400 °C heißen Vorwärmeofen gesetzt und mit maximaler Aufheizrate bis 880 °C aufgeheizt und dort für 20 min bei dieser Temperatur gehalten. Danach wird die Gussmuffel im Ofen auf 400 °C abgekühlt. Nach einer Haltezeit von 30 min bei dieser Temperatur wird die Gussmuffel abgegossen.

Im Vergleich zeigt sich, dass die Ergebnisse des Abgießens miteinander absolut gleichwertig sind, d.h. die Zeitersparnis, die sich durch die Vorgehensweise des Beispiels 2 ergibt, mit einer Zeitersparnis von 4 bis 5 Stunden, wirkt sich auf die Qualität des Gussobjektes in keiner Weise aus.

Dies bestätigt das überraschende Ergebnis der vorliegenden Erfindung, nämlich dass die erfindungsgemäß hergestellten Gussmuffeln auch bei Verwendung von handelsüblichen Einbettmassen in ihrer thermischen Stabilität deutlich verbessert werden. Insbesondere sind erfindungsgemäß hergestellte Muffeln härter als solche die an Luft ausgehärtet werden bis zum Vorwärmen zum Guss. Die Muffeln sind auch bei der Gießtemperatur deutlich stabiler, und Risse, die in den Muffeln bei herkömmlichen Vorgehensweisen zum Teil zu beobachten sind, treten bei den erfindungsgemäß hergestellten Gussmuffeln nicht auf.

Ferner wird bei der herkömmlichen Technologie auch hin und wieder beobachtet, dass sogenannte Vorwärmungsrisse entstehen, insbesondere dann, wenn die Größe der Gussmuffeln zunimmt. Insbesondere die größten, sogenannten 9er-Gussmuffeln sind als empfindlich bekannt.

Bei der Anwendung des erfindungsgemäßen Verfahrens treten jedoch auch bei der größten Gussformgröße keine Risse auf.

Des weiteren wird beobachtet, dass Risse vermieden werden, wie sie insbesondere beim Vakuumdruckguss, wie er für den Titanguss üblicherweise angewendet wird, die dann zu Argongaseinschlüssen in den Gussmuffeln führen können. Dies macht dann eine Nachbearbeitung der Gussobjekte oder eine Wiederholung des Gusses erforderlich. Werden erfindungsgemäß hergestellte Gussmuffeln verwendet, werden solche Einschlüsse nicht beobachtet.

Die weiter überraschende Auswirkung des erfindungsgemäßen Verfahrens ist die, dass die thermische Stabilität der Muffeln durch die Mikrowellenbehandlung und die anschließende Ruhephase so erhöht wird, dass eine beschleunigte Vorwärmung und Aufheizung auf die Sinterungsendtemperatur der Muffeln möglich ist. Das sogenannte Speed-Verfahren erfordert ansonsten speziell vorbereitete Einbettmassen und ein exakt terminiertes Vorgehen. Werden Gussmuffeln gemäß der vorliegenden Erfindung hergestellt, können zum einen herkömmliche Einbettmassen verwendet werden, zum anderen entfällt das exakte Terminieren der einzelnen Verfahrensschritte.

Darüber hinaus sind für Titaneinbettmassen spezielle Einbettmassen für das Speed-Verfahren bislang überhaupt nicht bekannt.

## Patentansprüche

1. Verfahren zur Herstellung einer Gussmuffel aus einer Einbettmasse für die Herstellung von metallischen Gießlingen, insbesondere für die Dentaltechnik, wobei die Einbettmasse mit einer Anmischflüssigkeit zu einer gießbaren, abbindefähigen Masse verarbeitet und in einen Formenhohlraum, welcher gegebenenfalls ein Wachs- und/oder Kunststoffmodell enthält, eingegossen wird, wobei die gießbare Masse in dem Formenhohlraum partiell aushärten gelassen wird, wobei die partiell ausgehärtete gießbare Masse einer Mikrowellenbestrahlung von max. 500 W während 2 bis 15 min ausgesetzt wird, wobei das Wachs- und/oder Kunststoffmodell im Wesentlichen unverändert erhalten bleibt, wobei die Muffel anschließend ohne Energieeintrag für mindestens 5 min ruhen gelassen wird und wobei nach dieser Ruhephase die Wachs- und/oder Kunststoffmaterialien des Modells ausgeschmolzen werden.

2. Verfahren nach Anspruch 1, **dadurch gekennzeichnet, dass** die Einbettmasse aus phosphatgebundenen Einbettmassen ausgewählt wird.

3. Verfahren nach Anspruch 1 oder 2, **dadurch gekennzeichnet, dass** die Einbettmasse aus Einbettmassen für das Gießen von edelmetallhaltigen und edelmetallfreien Dentallegierungen ausgewählt wird.

4. Verfahren nach einem der Ansprüche 1 bis 3, **dadurch gekennzeichnet, dass** als Einbettmasse eine Masse verwendet wird, welche für das Gießen von Titan oder Titanlegierungen geeignet ist.

5. Verfahren nach einem der voranstehenden Ansprüche, **dadurch gekennzeichnet, dass** die Einbettmasse aus Spinelleinbettmassen ausgewählt wird.

6. Verfahren nach einem der voranstehenden Ansprüche, **dadurch gekennzeichnet, dass** die Gussmuffel zum Ausschmelzen der Wachs- und/oder Kunststoffmaterialien in einen auf 300 °C bis 500 °C vorgeheizten Ofen gesetzt wird und die Ofentemperatur ausschließlich auf Gusstemperatur erhöht wird.

7. Verfahren nach einem der Ansprüche 1 bis 5, **dadurch gekennzeichnet, dass** die Gussmuffel zum Ausschmelzen der Wachs- und/oder Kunststoffmaterialien in einen auf Gusstemperatur vorgeheizten Ofen gesetzt wird.

8. Verfahren nach einem der Ansprüche 1 bis 7, **dadurch gekennzeichnet, dass** die Mikrowellenbestrahlung mit 80 bis 150 W erfolgt.

9. Gussmuffel hergestellt nach einem der Verfahren der Ansprüche 1 bis 8.

10. Verwendung einer Gussmuffel gemäß Anspruch 9 für die Herstellung von festsitzendem Zahnersatz.

11. Verwendung einer Gussmuffel gemäß Anspruch 9 für die Herstellung von herausnehmbarem Zahnersatz.

## Claims

1. A method for producing a casting mould from an investment for the production of metal castings, in particular for dental work, the investment being processed with a mixing fluid into a castable mass which is capable of bonding and being poured into a moulding cavity which optionally contains a wax and/or plastics pattern, the castable mass being allowed to partially harden in the moulding cavity, the partially hardened castable mass being exposed to a microwave radiation of 500 watt maximum for 2 to 15 minutes, the wax and/or plastics pattern remaining substantially unchanged, the mould subsequently being left stand, without energy input, for at least 5 minutes, and, after this standing phase, the wax and/or plastics materials of the pattern being melted out.

2. A method according to Claim 1, **characterised in that** the investment is selected from phosphate-bonded investments.

3. A method according to Claim 1 or 2, **characterised in that** the investment is selected from investments for casting dental alloys containing noble metals and dental alloys which are free from noble metals.

4. A method according to one of Claims I to 3, **characterised in that** as investment, a material is used which is suited for the casting of titanium or titanium alloys.

5. A method according to one of the preceding claims, **characterised in that** the investment is selected from Spinel investments.

6. A method according to one of the preceding claims, **characterised in that** the casting mould is placed, for the purpose of melting out the wax and/or plastics materials, into an oven which is pre-heated to 300°C to 500°C and the oven temperature is raised exclusively to casting temperature.

7. A method according to one of Claims 1 to 5, **characterised in that** the casting mould, for the purpose of melting out the wax and/or plastics materials, is placed into an oven pre-heated to casting temperature.

8. A method according to one of Claims 1 to 7, **characterised in that** the microwave radiation is effected with 80-150 watts.

9. Casting mould produced according to one of the methods of Claims 1 to 8.

10. Use of a casting mould according to Claim 9 for the production of a fixed denture.

11. Use of a casting mould according to Claim 9 for the production of a removable denture.

## Revendications

1. Procédé de fabrication d'un moule de coulée à partir d'une masse d'incorporation pour la production de pièces coulées métalliques, en particulier pour la technologie dentaire, dans lequel on transforme la masse d'incorporation avec un liquide de mélangeage en une masse susceptible d'être coulée et de prendre, et on la fait couler dans une cavité de moulage qui comprend le cas échéant un modèle de cire et/ou de matière plastique, on laisse partiellement durcir la masse susceptible d'être coulée dans la cavité de moulage, on expose la masse susceptible d'être coulée et partiellement durcie à une irradiation aux micro-ondes d'une puissance maximale de 500 W pendant 2 à 15 minutes, le modèle de cire et/ou de matière plastique restant maintenu sensiblement inchangé, ensuite on laisse reposer le moule sans apport d'énergie pendant au moins 5 minutes et après cette phase de repos, on fait fondre les matériaux de cire et/ou de matière plastique du modèle.

2. Procédé selon la revendication 1, **caractérisé en ce que** l'on choisit la masse d'incorporation parmi les masses d'incorporation liées au phosphate.

3. Procédé selon la revendication 1 ou 2, **caractérisé en ce que** l'on choisit la masse d'incorporation parmi les masses d'incorporation pour la coulée d'alliages dentaires contenant des métaux nobles et exempts de métaux nobles.

4. Procédé selon l'une des revendications 1 à 3, **caractérisé en ce que** l'on utilise à titre de masse d'incorporation une masse qui convient pour la coulée de titane ou d'alliages de titane.

5. Procédé selon l'une des revendications précédentes, **caractérisé en ce que** l'on choisit la masse d'incorporation parmi les masses d'incorporation à spinelle.

6. Procédé selon l'une des revendications précédentes, **caractérisé en ce que** pour faire fondre les matériaux de cire et/ou de matière plastique, on pose le moule de coulée dans un four préchauffé à une température de 300°C à 500°C, et ensuite on augmente la température exclusivement à la température de coulée.

7. Procédé selon l'une des revendications 1 à 5, **caractérisé en ce que** pour faire fondre les matériaux de cire et/ou de matière plastique, on pose le moule de coulée dans un four préchauffée à la température de coulée.

8. Procédé selon l'une des revendications 1 à 7, **caractérisé en ce que** l'irradiation aux micro-ondes s'effectue à une puissance de 80 à 150 W.

9. Moule de coulée, réalisé selon le procédé des revendications 1 à 8.

10. Utilisation d'un moule de coulée selon la revendication 9 pour la réalisation d'une prothèse dentaire fixe.

11. Utilisation d'un moule de coulée selon la revendication 9 pour la réalisation d'une prothèse dentaire amovible.
